# EUROPEAN PATENT APPLICATION

(11) **EP 4 502 842 A1**
(43) Date of publication of application: **05.02.2025**
(21) Application number: 23189641.6
(22) Date of filing: 04.08.2023
(51) Int. Cl.: G06F 21/55, G06F 21/56, H04L 9/40

(54) **ARRANGEMENT AND METHOD OF THREAT DETECTION IN A COMPUTER OR COMPUTER NETWORK**

(71) Applicant: WithSecure Corporation, 00180 HELSINKI (FI)
(72) Inventor: AQUILINO, Broderick, 00180 Helsinki (FI); TURBIN, Pavel, 00180 Helsinki (FI)
(74) Representative: Berggren Oy

(57) **Abstract**

An arrangement and a method, e.g. a computer implemented method, for preventing file share related threats in a computer, such as a server (2), or computer network, wherein the method comprises: intercepting an attempt to access a file, such as an attempt to modify, create, rename and/or delete a file, in a monitored location of a computer file system, e.g. in a folder (4) on a server, determining a user identification of a user, such as a remote user, attempting to access the file, creating a backup copy of the file, allowing the attempt to access the file in a monitored location of computer file system, e.g. in a shared folder (4), after creation of the backup copy of the file, checking corruption of the file after access to file by the user is closed, tracking of multiple accessed files within the same user session based on the determined user identification, and if more than a predefined number of files become corrupted by the same user identification, blocking access of the user to the computer, such as a server (2), and restoring the accessed and/or changed files from the backup copies of the files.

## Description

### Technical Field

The present invention relates to an arrangement and a method of threat detection in a computer or computer network.

### Background

Threat detection is a vital issue for the security of any kind of computers and networks. E.g. threat or malware detection is generally directed to identify and potentially also disinfect any kind of malware on computer and/or communication systems, such as e.g. viruses, Trojans, worms, or other kinds of security threats.

One of the threats encountered by computers is ransomware. Ransomware is a class of malware which will encrypt files on a computer and then demands a ransom before the files are recovered. There are systems and solutions which can detect at least part of ransomware-based threats.

One of the important areas to protect against ransomware is defense of shared files and storage locations. With shared folders multiple users can access same files on a shared folder or site and often every user can read, modify and delete files. A shared folder can be accessible via a network manager and visible on local machines as a path (e.g. \\server\share). On file server the shared files or folders can be stored e.g. to a local folder of the server and access can be given to users via a network manager. When one computer having access to a shared file or a shared folder gets infected by a ransomware, the ransomware is able to encrypt also a shared file or shared files on the shared folder. Such outbreak will cause significant damage for organizations as it can distract working process of all other users. Also, file server may have to be put offline.

The problem with the prior art solutions in file share-related ransomware threats is that the prior art solutions are not able to detect reliably and efficiently file share-related threats or handle the situation caused by ransomware in file share-environments.

Therefore, it would be desirable to provide an efficient file share-related threat detection which is able to operate efficiently.

### Summary

The following presents a simplified summary in order to provide basic understanding of some aspects of various invention embodiments. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments of the invention.

According to a first aspect, the invention relates to a method, e.g. a computer implemented method, for preventing file share related threats in a computer, such as a server, or computer network. The method comprises intercepting an attempt to access a file, such as an attempt to modify, create, rename and/or delete a file, in a monitored location of a computer file system, e.g. in a folder on a server, determining a user identification of a user, such as a remote user, attempting to access the file, creating a backup copy of the file, allowing the attempt to access the file in a monitored location of computer file system, e.g. in a shared folder. The method further comprises, after creation of the backup copy of the file, checking corruption of the file after access to file by the user is closed, tracking of multiple accessed files within the same user session based on the determined user identification, and if more than a predefined number of files become corrupted by the same user identification, blocking access of the user to the computer, such as a server, and restoring the accessed and/or changed files from the backup copies of the files.

In one embodiment of the invention only files which are predefined file types are checked for corruption of the file, e.g. compression file types, such as ZIP-files, image files, such as JPG-files and/or executable files, such as EXE-files.

In one embodiment of the invention checking the file corruption comprises checking the selected file by parsing the file e.g. by parsing a file structure of the file.

In one embodiment of the invention checking the file corruption comprises analyzing the file structure based on the type of the file, e.g. by recognizing by magic bytes of the file. In one embodiment of the invention checking corruption of the file after accessing the file comprises comparing the created backup copy and latest version of the file and/or checking whether either of these files or both of these are corrupted.

In one embodiment of the invention checking the file corruption comprises determining ASCII-rate of the file, e.g. a rate of a total number of ASCII-characters in a file to a total number of bytes in a file.

In one embodiment of the invention if less than a predefined number of files become corrupted by the same user identification, allowing access of that user to the server for a predefined duration without tracking or checking the files accessed by the user.

In one embodiment of the invention the accessed and/or analyzed files are grouped per user to determine which user session is malicious.

In one embodiment of the invention the user session is a session which comprises essentially all operations performed by different processes from a process tree, or a session which comprises essentially all operations performed by a user per network session.

In one embodiment of the invention the user identification is a global user identification (ID) on a server or a service.

In one embodiment of the invention a list of analyzed file types and/or file type determination methods are received from a server, such as a back-end server, e.g. periodically.

According to a second aspect, the invention relates to an arrangement for preventing file share related threats in a computer or computer network, wherein the arrangement comprises at least one computer, such as a server. The computer is configured to intercept an attempt to access a file, such as an attempt to modify, create, rename and/or delete a file, in a monitored location of a computer file system, e.g. in a folder on a server, to determine a user identification of a user, such as a remote user, attempting to access the file, to create a backup copy of the file. The computer is further configured to allow the attempt to access the file in a monitored location of computer file system, e.g. in a shared folder, after creation of the backup of the file, to check corruption of the file once access to file by the user is closed, to track multiple accessed files within the same user session based on the determined user identification, and if more than a predefined number of files become corrupted by the same user identification, to block access of the user to the server and to restore the accessed and/or changed files from the backup copies of the files.

In one embodiment of the invention the arrangement is configured to carry out a method according to any embodiment of the invention.

According to a third aspect, the invention relates to a computer program comprising instructions which, when executed by a computer, cause the computer to carry out a method according to the invention.

According to a fourth aspect, the invention relates to a computer-readable medium comprising the computer program according to the invention.

With the solution of the invention, it's possible to detect reliably and efficiently file share-related threats and/or ransomware. It's also possible to handle the situation caused by ransomware in file share-environments with the solution of the invention so that computers infected by ransomware can't have effect on the shared files and files on shared folders. With the solution of the invention the server (comprising e.g. a file server) is able to monitor remote users and their behavior and in case a user with malicious activity is identified, the server is able to block access of the user and revert back the changes done at the server by the user with identified malicious activity.

Various exemplifying and non-limiting embodiments of the invention both as to constructions and to methods of operation, together with additional objects and advantages thereof, will be best understood from the following description of specific exemplifying and non-limiting embodiments when read in connection with the accompanying drawings.

The verbs "to comprise" and "to include" are used in this document as open limitations that neither exclude nor require the existence of unrecited features. The features recited in dependent claims are mutually freely combinable unless otherwise explicitly stated.

Furthermore, it is to be understood that the use of "a" or "an", i.e. a singular form, throughout this document does not exclude a plurality.

### Brief description of the drawings

The embodiments of the invention are illustrated by way of example, and not by way of limitation, in the figures of the accompanying drawings.
- Figure 1: presents as a schematic diagram a computer system or computer network configuration, for which exemplifying embodiments of the present invention are applicable.
- Figure 2: presents schematically an example embodiment of a solution of the present invention.
- Figure 3: presents an example method according to one embodiment of the invention.
- Figure 4: presents as a schematic diagram an example of a structure of an arrangement according to exemplifying embodiments of the present invention.

### Detailed description

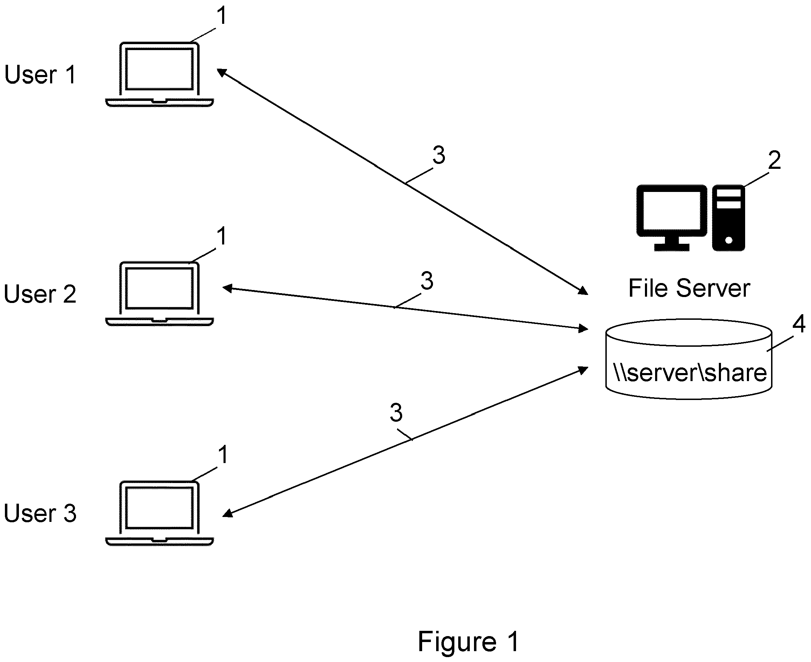

Figure 1 presents an environment in which the solution of the invention can be used. In the solution of Figure 1 a system configuration is presented in which user computers 1 and server computer 2 are connected via a network 3. Here, the user computers 1 and server exemplifies any computing device, computer or communication system, including a single device, a network node or a combination of devices. For example, the server 2 may include or be connected to a security entity or a backend entity of a security provider, or the like, and the server 2 may be implemented as a cloud implementation or the like.

The network 3 exemplifies any computer or communication network, including e.g. a (wired or wireless) local area network like LAN, WLAN, Ethernet, or the like, a (wired or wireless) wide area network like WiMAX, GSM, UMTS, LTE, or the like, and so on. Hence, the user computer 1 and the server 2 can but do not need to be located at different locations. For example, the network 3 may be any kind of TCP/IP-based network. Insofar, communication between the host 1 and the server 2 over the network 3 can be realized using for example any standard or proprietary protocol carried over TCP/IP.

In the example of Figure 1, there are multiple users accessing the files on share folder 4 with their computers. Users can read, modify and delete files in the shared folder 4 with their computers. The shared folder 4 can be accessible e.g. via a network manager and it can be visible on user computers, e.g. as \\sever\share path. On the server 2, such as File Server, the files can be stored to a local folder, e.g. c:\share, and this folder can be shared for users via network manager.

The invention relates to a method, e.g. a computer implemented method, for preventing file share related threats in a computer, such as a server, or computer network. The method comprises intercepting an attempt to access a file, such as an attempt to modify, create, rename and/or delete a file, in a monitored location of a computer file system, e.g. in a folder on a server, determining a user identification of a user, such as a remote user, attempting to access the file, creating a backup copy of the file, allowing the attempt to access the file in a monitored location of computer file system, e.g. in a shared folder. The method further comprises, after creation of the backup copy of the file, checking corruption of the file after access to file by the user is closed, tracking of multiple accessed files within the same user session based on the determined user identification, and if more than a predefined number of files become corrupted by the same user identification, blocking access of the user to the computer, such as a server, and restoring the accessed and/or changed files from the backup copies of the files. In one embodiment of the invention these steps are carried out at the server and this way the server is able to detect and prevent file share related threats, e.g. coming from remote users and their computer which may be compromised and infected.

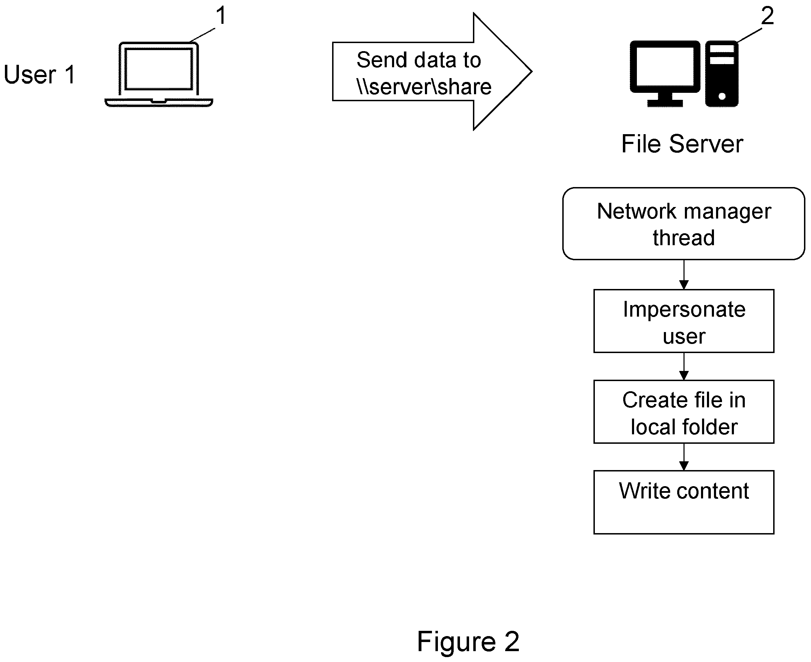

Fig. 2 presents one example embodiment of the invention. In this example embodiment a scenario is illustrated where a user writes a file to shared folder \\server\share which folder is mapped to a local folder, e.g., c:\share, on the file server. The data of the file to be saved is received from user computer to server via the network. To save the data network manager can e.g. run a worker kernel thread. The thread can impersonate security credentials of original user, where user can be identified by a user ID, such as SID (global ID on server). The thread can create the file in the shared folder on local file system within the server. A security manager function can validate that the user has access permission using the impersonation. File creator information can be assigned to the identified user. Worker thread can save the received content to a local file on the server.

A kernel file filter driver can be utilized in the solution of the invention which is capable to intercept file system events. In one embodiment of the invention the filter driver can be used to implement at least one embodiment of the invention to protect the local folder of the server from ransomware encryption.

In one example embodiment, based on the detected attempt to modify or create a file on the server, the create file with write permission or delete or rename file in the protected share folder can be intercepted at the server, e.g. by the filter driver. The identity of the user, e.g. a user impersonation SID, can be determined, e.g. by the filter driver, and it can be checked if this user (e.g. SID) was not recently handled. If the user is not previously handled, a shadow copy of the accessed file can be made, e.g. by the filter driver. Then the requested changes to the file by the remote user computer are allowed. Once the file is closed, it can be checked whether the file after modification is corrupted. Corruption check can be done in the ways described in this application, e.g. by comparing backup copy and latest changed. Multiple files within the same user session are tracked and if more than certain number of files become corrupted, it can be determined that the user is a malicious actor. User access can be blocked to the server and the changed files can be reverted from shadow backup based on determination of the user being a malicious actor. In one example embodiment the threshold level can be set for example between any number 1-10 (e.g. 1, 2, 3, 4, 5, 6, 7, 8, 9, 10) of corrupted files within the same user session for determining the user as malicious.

In one embodiment of the invention the accessed and/or analyzed files are grouped per user to determine which user session is malicious. In one embodiment of the invention the user session is a session which comprises essentially all operations performed by different processes from a process tree, or a session which comprises essentially all operations performed by a user per network session. In one embodiment of the invention the user identification is a global user identification (ID) on a server or a service.

In one embodiment of the invention, if after analyzing certain number of files and not reaching a threshold number of corrupted files, it can be determined that the user is legit user. In this case the modifications done by that specific user can be allowed and the files modified by the user are not tracked and/or monitored for a predefined period. In one embodiment of the invention, after that predetermined period expires, the user and the files accessed by the user in the shared folder are tracked according to the solution of the invention.

In one embodiment of the invention checking for corruption of the files can be based at least in part of the following: recognizing format of the file, e.g. ZIP, PE, image and/or parsing the structures of file using the correspondent format parser. For example, the following properties of the files can be analyzed: for compression files, such as ZIP-files, a list of files in the compression file can be fetched, for executable files, such as PE-files, headers and section can be loaded and analyzed, for image files headers, color, size, and other properties can be loaded and analyzed. In one embodiment of the invention the file can be determined to be corrupted if a parser fails to process the analyzed file.

In one embodiment of the invention only files which are predefined file types are checked for corruption of the file, e.g. compression file types, such as ZIP-files, image files, such as JPG-files and/or executable files, such as EXE-files.

In one embodiment of the invention checking the file corruption comprises analyzing the file structure based on the type of the file, e.g. by recognizing by magic bytes of the file.

In one embodiment of the invention checking the file corruption comprises determining ASCII-rate of the file, e.g. a rate of a total number of ASCII-characters in a file to a total number of bytes in a file.

In one embodiment of the invention checking corruption of the file after accessing the file comprises comparing the created backup copy and latest version of the file and/or checking whether either of these files or both of these are corrupted.

In one embodiment of the invention a list of analyzed file types and/or file type determination methods are received from a server, such as a back-end server, e.g. periodically.

In one embodiment the invention also relates to a solution of recognizing file encryption on a user computing device, e.g. a user computer, and thereby ransomware on the user computing device. In this case recognizing file corruption after a file has been accessed does not have to be related to file sharing but files on the user computing device. In this embodiment determining files (e.g. files which are being accessed by the user computer) for corruption can be done as described above with the file share-related embodiments of the invention.

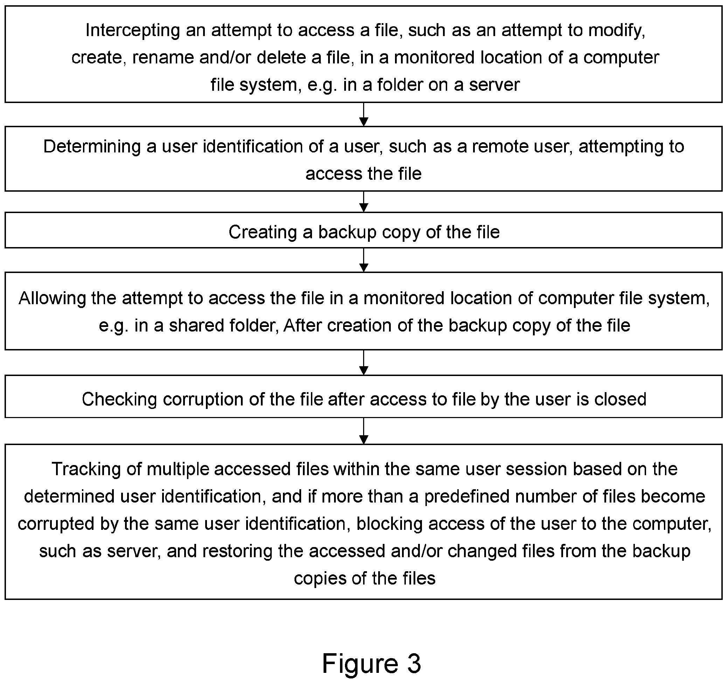

Figure 3 presents an example method according to one embodiment of the invention. The example method comprises intercepting an attempt to access a file, such as an attempt to modify, create, rename and/or delete a file, in a monitored location of a computer file system, e.g. in a folder on a server, determining a user identification of a user, such as a remote user, attempting to access the file, creating a backup copy of the file, allowing the attempt to access the file in a monitored location of computer file system, e.g. in a shared folder. The method further comprises, after creation of the backup copy of the file, checking corruption of the file after access to file by the user is closed, tracking of multiple accessed files within the same user session based on the determined user identification, and if more than a predefined number of files become corrupted by the same user identification, blocking access of the user to the computer, such as a server, and restoring the accessed and/or changed files from the backup copies of the files.

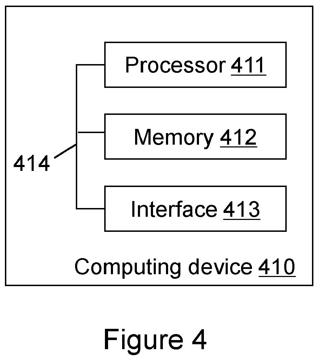

Figure 4 presents as an example, some example components of a user computer or a server which can be used in the solution of the invention. As presented in Figure 4, a computing device 410, such as a user computer or a server, or at least part of the computing device, may comprise at least one processor 411 and at least one memory 412, and possibly also at least one interface 413, which may be operationally connected or coupled, for example by a bus 414 or the like, respectively.

The processor 411 of the computing device 410 is configured to read and execute computer program code stored in the memory 412. The processor may be represented by a CPU (Central Processing Unit), a MPU (Micro Processor Unit), etc., or a combination thereof. The memory 412 of the computing device 410 is configured to store computer program code, such as respective programs, computer/processor-executable instructions, macros or applets, etc. or parts of them. Such computer program code, when executed by the processor 411, enables the computing device 410 to operate in accordance with exemplifying embodiments of the present invention. The memory 412 may be represented by a RAM (Random Access Memory), a ROM (Read Only Memory), a hard disk, a secondary storage device, etc., or a combination of two or more of these.

The interface 413 of the computing device 410 is configured to interface with another computing device and/or the user of the computing device 410. That is, the interface 413 may represent a communication interface (including e.g. a modem, an antenna, a transmitter, a receiver, a transceiver, or the like) and/or a user interface (such as a display, touch screen, keyboard, mouse, signal light, loudspeaker, or the like).

The user computers and/or the server can comprise also other protection means preventing malware related threats, e.g. similar threats as described above or other kind of malware related threats. The protection means can for example comprise a real-time monitor which is able to analyze a computer application. The real-time monitoring can be implemented for example by using a malware analysis environment, such as a virtual machine or emulator environment, arranged at the user computers and/or at the server. For example, a malware scanning agent or sensor, such as e.g. an anti-virus software can be installed/arranged at the computing device to be used for malware scanning. In one embodiment of the invention a sensor or agent at the computer or server is used to allow to intercept a file, a system configuration value and/or network operations called by the application. The sensor can be used to observe operation of the device, such as a computer, and information collected by the sensor can be used to detect malicious behavior of an application, a file and/or a process. In one embodiment of the invention a real-time monitor requests a sandbox unit to analyze the application. The sandbox unit can monitor or collect the behavior of the application and, e.g. periodically, and evaluate them against a set of heuristics. The sandbox unit can also quarantine the application. After analysis of the application, the result of the analysis (e.g. malicious or not malicious) can be reported to the real-time monitor. The real-time monitor does not have to be any separate element or component but in the solution of the invention its functionality can be included in the system, malware analysis environment and/or the functionality of a user computer and/or a server. In one embodiment of the invention the functionality of the real-time monitor can be implemented in the user computer or server e.g. in the antimalware software.

In one embodiment of the invention the malware scanning environment, service and/or software can detect starting and closing of applications, all unusual processes and attach monitoring to the required applications and processes. Also, when the services are started early, the service is able to detect and follow most of user's application. In one embodiment of the invention, when the malware scanning software or service is started up, it can perform running application inventory.

In the solution of the invention the computing device, e.g. a sensor and/or a malware scanning agent on the computing device, such as a user computer or server, detects that an application is starting at the host. In one embodiment of the invention, in addition to preventing file share related threats according to different embodiments of the invention, a risk rating of the application which is starting is identified. Based on the identified risk rating of the application a snapshot of the device is created if the risk rating of the application is high, such as above a certain risk rating threshold value, and/or if the risk rating of the application is unknown. The application is allowed to run after the identification of the risk rating of the application. If the application is determined to be malware when the application is running, the application is stopped, the malware is removed, and changes made to the host are reverted based on the said snapshot of the host. In one embodiment of the invention the risk rating can be identified by making a request from a server, which server may comprise a malware scanning and risk rating and/or reputation database. The data collected with the solution of the invention may be stored in a database or similar model for information storage for further use.

In an embodiment, further actions may be taken to secure the user computer or the computer network when a malicious file, application or activity has been detected. Also, actions by changing the settings of the computers or other network nodes can be done. Changing the settings may include, for example, one or more nodes (which may be computers or other devices) being prevented from being switched off in order to preserve information in RAM, a firewall may be switched on at one or more nodes to cut off the attacker immediately, network connectivity of one or more of the network nodes may be slowed down or blocked, suspicious files may be removed or placed into quarantine, logs may be collected from network nodes, sets of command may be executed on network nodes, users of the one or more nodes may be warned that a threat or anomaly has been detected and that their workstation is under investigation, and/or a system update or software patch may be sent from the security backend to the nodes. In one embodiment of the invention one or more of these actions may be initiated automatically.

Although the invention has been described in terms of preferred embodiments as set forth above, it should be understood that these embodiments are illustrative only and that the claims are not limited to those embodiments. Those skilled in the art will be able to make modifications and alternatives in view of the disclosure which are contemplated as falling within the scope of the appended claims. Each feature disclosed or illustrated in the present specification may be incorporated in the invention, whether alone or in any appropriate combination with any other feature disclosed or illustrated herein. Lists and groups of examples provided in the description given above are not exhaustive unless otherwise explicitly stated.

## Claims

1. A method, e.g. a computer implemented method, for preventing file share related threats in a computer, such as a server (2), or computer network, wherein the method comprises:
intercepting an attempt to access a file, such as an attempt to modify, create, rename and/or delete a file, in a monitored location of a computer file system, e.g. in a folder (4) on a server,
determining a user identification of a user, such as a remote user, attempting to access the file,
creating a backup copy of the file,
allowing the attempt to access the file in a monitored location of computer file system, e.g. in a shared folder (4), after creation of the backup copy of the file,
checking corruption of the file after access to file by the user is closed,
tracking of multiple accessed files within the same user session based on the determined user identification, and
if more than a predefined number of files become corrupted by the same user identification, blocking access of the user to the computer, such as a server (2), and restoring the accessed and/or changed files from the backup copies of the files.

2. A method according to claim 1, wherein only files which are predefined file types are checked for corruption of the file, e.g. compression file types, such as ZIP-files, image files, such as JPG-files and/or executable files, such as EXE-files.

3. A method according to claim 1 or 2, wherein checking the file corruption comprises checking the selected file by parsing the file e.g. by parsing a file structure of the file.

4. A method according to any previous claim, wherein checking the file corruption comprises analyzing the file structure based on the type of the file, e.g. by recognizing by magic bytes of the file.

5. A method according to any previous claim, wherein checking corruption of the file after accessing the file comprises comparing the created backup copy and latest version of the file and/or checking whether either of these files or both of these are corrupted.

6. A method according to any previous claim, wherein checking the file corruption comprises determining ASCII-rate of the file, e.g. a rate of a total number of ASCII-characters in a file to a total number of bytes in a file.

7. A method according to any previous claim, wherein if less than a predefined number of files become corrupted by the same user identification, allowing access of that user to the server (2) for a predefined duration without tracking or checking the files accessed by the user.

8. A method according to any previous claim, wherein the accessed and/or analyzed files are grouped per user to determine which user session is malicious.

9. A method according to any previous claim, wherein the user session is a session which comprises essentially all operations performed by different processes from a process tree, or a session which comprises essentially all operations performed by a user per network session.

10. A method according to any previous claim, wherein the user identification is a global user identification (ID) on a server (2) or a service.

11. A method according to any previous claim, wherein a list of analyzed file types and/or file type determination methods are received from a server (2), such as a back-end server, e.g. periodically.

12. An arrangement for preventing file share related threats in a computer or computer network, wherein the arrangement comprises at least one computer, such as a server (2), wherein the computer is configured:
to intercept an attempt to access a file, such as an attempt to modify, create, rename and/or delete a file, in a monitored location of a computer file system, e.g. in a folder (4) on a server,
to determine a user identification of a user, such as a remote user, attempting to access the file,
to create a backup copy of the file,
to allow the attempt to access the file in a monitored location of computer file system, e.g. in a shared folder (4), after creation of the backup of the file,
to check corruption of the file once access to file by the user is closed,
to track multiple accessed files within the same user session based on the determined user identification, and
if more than a predefined number of files become corrupted by the same user identification, to block access of the user to the computer, such as server (2), and to restore the accessed and/or changed files from the backup copies of the files.

13. An arrangement according to claim 12, wherein the arrangement is configured to carry out a method according to any claim 2-11.

14. A computer program comprising instructions which, when executed by a computer, cause the computer to carry out the method according to any of claims 1 - 11.

15. A computer-readable medium comprising the computer program according to claim 14.
